(19) Europäisches Patentamt / European Patent Office / Office européen des brevets

(11) **EP 1 253 706 B1**

(12) **EUROPÄISCHE PATENTSCHRIFT**

(45) Veröffentlichungstag und Bekanntmachung des Hinweises auf die Patenterteilung:
**07.08.2013 Patentblatt 2013/32**

(51) Int Cl.:
*H02M 7/48* *(2007.01)*    *H02M 1/12* *(2006.01)*
*H02M 7/483* *(2007.01)*

(21) Anmeldenummer: **01810402.6**

(22) Anmeldetag: **25.04.2001**

(54) **Leistungselektronische Schaltungsanordnung und Verfahren zur Uebertragung von Wirkleistung**

Power electronic circuit and process to transfer active power

Circuit d'électronique de puissane et procédé pour transférer la puissance active

(84) Benannte Vertragsstaaten:
**CH DE FR GB IT LI SE**

(43) Veröffentlichungstag der Anmeldung:
**30.10.2002 Patentblatt 2002/44**

(73) Patentinhaber: **ABB Schweiz AG**
**5400 Baden (CH)**

(72) Erfinder:
• **Steimer, Peter**
**5424 Unterehrendingen (CH)**

• **Veenstra, Martin**
**1006 Lausanne (CH)**

(74) Vertreter: **ABB Patent Attorneys**
**C/o ABB Schweiz AG**
**Intellectual Property CH-IP**
**Brown Boveri Strasse 6**
**5400 Baden (CH)**

(56) Entgegenhaltungen:
**EP-A- 0 802 617    EP-A- 0 884 831**
**US-A- 5 642 275    US-A- 6 005 788**

**Beschreibung**

**Technisches Gebiet**

Die Erfindung bezieht sich auf das Gebiet der Leistungselektronik. Sie bezieht sich auf eine leistungselektronische Schaltungsanordnung zur Übertragung von Wirkleistung gemäss dem Oberbegriff des Patentanspruches 1 und auf ein Verfahren zum Betrieb einer leistungselektronischen Schaltungsanordnung gemäss dem Oberbegriff des Patentanspruches 6.

**Stand der Technik**

Eine derartige Schaltungsanordnung ist beispielsweise aus der DE-A-196 15 855 bekannt. Die Schaltungsanordnung weist einen ersten Stromrichter, der an eine Gleichspannungsquelle mit einer ersten Zwischenkreiskondensatorspannung angeschlossen ist und drei Lastanschlüsse aufweist, sowie zweite Stromrichter auf, welche zwischen die Lastanschlüsse und wechselspannungsseitigen Anschlüssen für eine Last angeschlossen sind. Mit einem der zweiten Stromrichter ist mindestens eine zweite Zwischenkreiskondensatorspannung oder allenfalls null Volt zu einer Spannung des jeweiligen Lastanschlusses addierbar oder subtrahierbar. Dabei ist die zweite Zwischenkreiskondensatorspannung kleiner als die erste Zwischenkreiskondensatorspannung. Dadurch lässt sich eine in Vergleich zur ersten Zwischenkreiskondensatorspannung feinere Spannungstufung einer Spannung an den wechselspannungsseitigen Anschlüssen respektive an der Last erreichen. Eine vorgegebene mittlere Spannung an den wechselspannungsseitigen Anschlüssen wird eingestellt, indem der erste Stromrichter einen Spannungswert in der Nähe der vorgegebenen Spannung grob einstellt, und der zweite Stromrichter eine verbleibende Differenz zur vorgegebenen Spannung durch Pulsdauermodulation einstellt. Dabei wird der zweite Stromrichter schneller getaktet als der erste. Die zweiten Stromrichter werden jeweils mittels eigener Umrichter und eines gemeinsamen Speisetransformators gespiesen. In der DE-A 197 20 787 wird ein Verfahren gezeigt, welches eine Rückspeisung von Energie aus den zweiten Stromrichtern vermeidet, so dass die entsprechenden Umrichter zur Speisung der zweiten Stromrichter reine Gleichrichter sein können, also nicht rückspeisefähig zu sein brauchen und somit kostengünstiger sind. In den beiden zitierten Fällen ist jedoch ein Aufwand zur Speisung der zweiten Stromrichter erforderlich.

In der EP 0 884 831 A2, in der EP 0 802 617 A2, in der US 6,005,788 und in der US 5,642,275 sind jeweils gattungsgemässe leistungselektronische Schaltungsanordnungen angeben.

**Darstellung der Erfindung**

Es ist Aufgabe der Erfindung, eine leistungselektronische Schaltungsanordnung zur Übertragung von Wirkleistung der eingangs genannten Art zu schaffen, welche einen vereinfachten Aufbau aufweist, sowie ein Verfahren zum Betrieb dieser Schaltungsanordnung zu schaffen.

Diese Aufgabe lösen eine leistungselektronische Schaltungsanordnung zur Übertragung von Wirkleistung mit den Merkmalen des Patentanspruches 1 und ein Verfahren zum Betrieb einer leistungselektronischen Schaltungsanordnung mit den Merkmalen des Patentanspruches 6.

Die erfindungsgemässe Schaltungsanordnung zur Übertragung von Wirkleistung weist einen ersten Stromrichter und mindestens einen zweiten Stromrichter auf, wobei der mindestens eine zweite Stromrichter keine eigenen Mittel zur Versorgung mit Energie aufweist. Der mindestens eine zweite Stromrichter weist also ausser den Verbindungen zum jeweiligen Lastanschluss des ersten Stromrichters und zum jeweiligen wechselspannungsseitigen Anschluss keine weiteren Anschlüsse oder Mittel zur Übertragung von Wirkleistung respektive Wirkenergie zum oder vom zweiten Gleichspannungszwischenkreis auf.

Dadurch entfallen die eingangs erwähnten Gleichrichter zur Speisung der zweiten Stromrichter, wodurch die Schaltungsanordnung wesentlich vereinfacht, kostengünstiger und zuverlässiger wird.

Zusätzlich weist die erfindungsgemässe Schaltungsanordnung eine Regeleinrichtung zur gemeinsamen Regelung von mindestens einer Zwischenkreiskondensatorspannung des mindestens einen zweiten Stromrichters und einer Commonmode-Spannung der wechselspannungsseitigen Anschlüsse der Schaltungsanordnung sowie Mittel zur Ansteuerung von Halbleiterschaltern des ersten Stromrichters und des mindestens einen zweiten Stromrichters nach Massgabe von Ausgangsgrössen dieser Regeleinrichtung auf.

Dadurch wird es möglich, zeitliche Mittelwerte der Spannungen der Zwischenkreiskapazitäten des mindestens einen zweiten Stromrichters und gegebenenfalls des ersten Stromrichters im wesentlichen konstant zu halten, obwohl die zweiten Stromrichter Wirkleistung mit einer Last und mit dem ersten Stromrichter austauschen.

In einer bevorzugten Ausführungsform der Erfindung ist zwischen einem Lastanschluss des ersten Stromrichters und dem zugeordneten wechselspannungsseitigen Anschluss jeweils ein zweiter Stromrichter in Serie geschaltet, wobei diese zweiten Stromrichter jeweils zwei Zweipunktwechselrichterbrücken aufweisen. Nominalspannungen der Zwischenkreiskondensatoren des ersten Stromrichters und der zweiten Stromrichter weisen vorzugsweise ein Verhältnis von 2:1 oder 3:1 auf. Damit ist eine Spannung an den wechselspannungsseitigen Anschlüssen mit einer Abstufung von 5 bis 9 Stufen einstellbar, wie die folgende Tabelle zeigt:

| erster Stromrichter | zweiter Stromrichter | Spannungs-verhältnis | Anzahl Stufen |
|---|---|---|---|
| 2-Punkt | 2-Punkt | 2:1 | 5 |
| 2-Punkt | 2-Punkt | 3:1 | 6 |
| 3-Punkt | 2-Punkt | 2:1 | 7 |
| 3-Punkt | 2-Punkt | 3:1 | 9 |

In einer weiteren bevorzugten Ausführungsform der Erfindung ist zwischen einem Lastanschluss des ersten Stromrichters und dem zugeordneten wechselspannungsseitigen Anschluss jeweils ein zweiter Stromrichter in Serie geschaltet, wobei diese zweiten Stromrichter jeweils eine Zweipunktwechselrichterbrücke und eine Dreipunktwechselrichterbrücke aufweisen. Nominalspannungen der Zwischenkreiskondensatoren des ersten Stromrichters und der zweiten Stromrichter weisen vorzugsweise ein Verhältnis von 2:1, 3:1, 4:1 oder 5:1 auf. Damit ist die Spannung an den wechselspannungsseitigen Anschlüssen mit einer Abstufung von 7 bis 15 Stufen einstellbar, wie die folgende Tabelle zeigt:

| erster Stromrichter | zweiter Stromrichter | Spannungs-verhältnis | Anzahl Stufen |
|---|---|---|---|
| 2-Punkt | 2/3-Punkt | 2:1 | 7 |
| 2-Punkt | 2/3-Punkt | 3:1 | 8 |
| 2-Punkt | 2/3-Punkt | 4:1 | 9 |
| 2-Punkt | 2/3-Punkt | 5:1 | 10 |
| 3-Punkt | 2/3-Punkt | 2:1 | 9 |
| 3-Punkt | 2/3-Punkt | 3:1 | 11 |
| 3-Punkt | 2/3-Punkt | 4:1 | 13 |
| 3-Punkt | 2/3-Punkt | 5:1 | 15 |

In einer weiteren bevorzugten Ausführungsform der Erfindung sind zwischen einem Lastanschluss des ersten Stromrichters und dem zugeordneten wechselspannungsseitigen Anschluss jeweils zwei zweite Stromrichter in Serie geschaltet, wobei diese zweiten Stromrichter jeweils zwei Zweipunktwechselrichterbrücken aufweisen. Damit lässt sich die Spannung an den wechselspannungsseitigen Anschlüssen mit einer Abstufung von 7 bis maximal 27 Stufen einstellen. Nominalspannungen der Zwischenkreiskondensatoren des ersten Stromrichters und der zweiten Stromrichter weisen vorzugsweise ein Verhältnis von 4:1:1, 5:1:1, 6:2:1, 7:2:1, 8:3:1 oder 9:3:1 auf.

Im erfindungsgemässen Verfahren wird mindestens eine Spannung von mindestens einer Zwischenkreiskapazität des mindestens einen zweiten Stromrichters und eine Commonmode- oder Gleichtakt-Spannung der wechselspannungsseitigen Anschlüsse der Schaltungsanordnung mittels einer gemeinsamen Regelung geregelt. In einer bevorzugten Variante der Erfindung berücksichtigt die gemeinsame Regelung auch eine Spannung des Zwischenkreises des ersten Stromrichters, insbesondere eine Neutralpunktspannung des Zwischenkreises. Die gemeinsame Regelung beeinflusst die geregelten Spannungen unter Berücksichtigung eines gemeinsamen Optimierungskriteriums.

In einer bevorzugten Variante der Erfindung wird eine gewichtete Summe der Quadrate der Abweichungen der geregelten Spannungen von einem jeweiligen Sollwert minimiert.

Weitere bevorzugte Ausführungsformen gehen aus den abhängigen Patentansprüchen hervor.

**Kurze Beschreibung der Zeichnungen**

Im folgenden wird der Erfindungsgegenstand anhand bevorzugter Ausführungsbeispiele, welche in den beiliegenden Zeichnungen dargestellt sind, näher erläutert. Es zeigen:

Figur 1     ein Schaltschema eines Teiles der erfindungsgemässen Schaltungsanordnung in Verbindung mit einer Last und einer Speisung;

Figur 2   einen ersten Stromrichter in einer zweiten Ausführungsform;

Figur 3   einen zweiten Stromrichter in einer zweiten Ausführungsform;

Figur 4   eine Serieschaltung von zwei zweiten Stromrichtern je Lastanschluss gemäss einer weiteren Ausführungsform der Erfindung;

Figur 5   ein Regelschema einer erfindungsgemässen Regelung in Verbindung mit einer erfindungsgemässen Schaltungsanordnung;

Figur 6   ein Regelschema einer erfindungsgemässen Regelung in Verbindung mit einer weiteren Ausführungsform der erfindungsgemässen Schaltungsanordnung;

Figur 7   ein Ersatzschaltbild entsprechend einer Phase einer erfindungsgemässen Schaltungsanordnung;

Figur 8   einen Verlauf von Umrichterspannungen; und

Figur 9   einen Verlauf von Modulationsgraden von Umrichterbrücken.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Wege zur Ausführung der Erfindung**

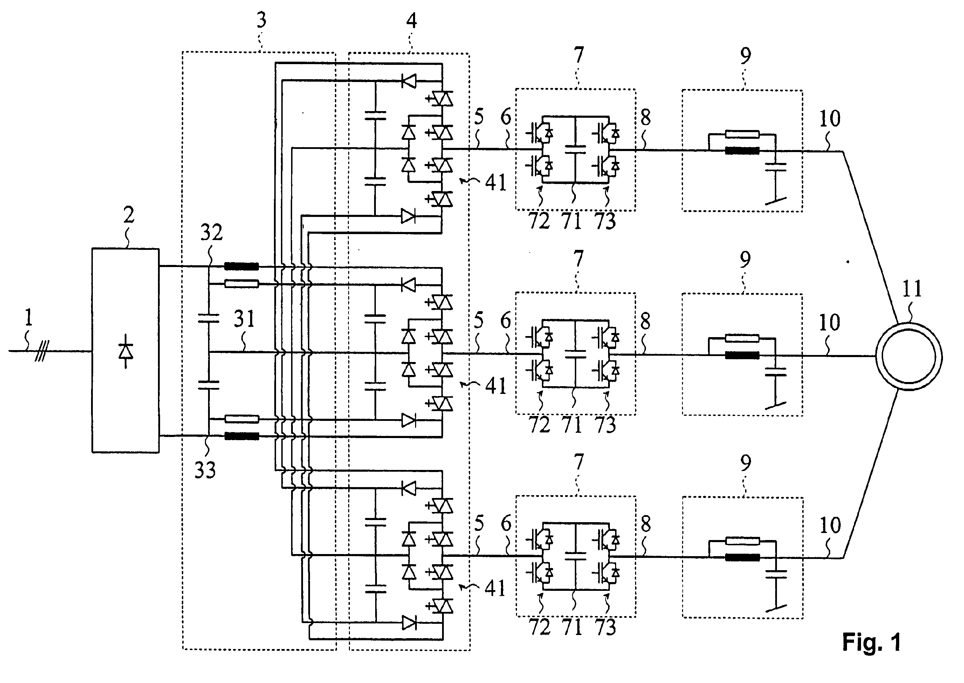

Die Figur 1 zeigt einen Teil der erfindungsgemässe Schaltungsanordnung in Verbindung mit einer Last und einer Speisung. Die Schaltungsanordnung dient zur Übertragung von Wirkleistung von einer Gleichspannungsseite an mindestens zwei wechselspannungsseitige Anschlüsse 10 oder umgekehrt. Die Gleichspannungsseite ist beispielsweise ein erster Gleichspannungszwischenkreis 3. Dieser weist eine erste Zwischenkreiskondensatorspannung, einen ersten Pluspol 32 und einen ersten Minuspol 33 auf und wird durch einen Gleichrichter 2, üblicherweise über einen Netztransformator 12, aus einem Energieversorgungsnetz 1 gespiesen. Der Gleichrichter 2 ist vorzugsweise ein rückspeisefähiger Umrichter, das heisst er ist fähig, Energie aus dem ersten Gleichspannungszwischenkreis 3 in das Energieversorgungsnetz 1 zu übertragen. In einer anderen Ausführungsform der Erfindung ist der Gleichrichter 2 ein Diodengleichrichter, also nicht rückspeisefähig.

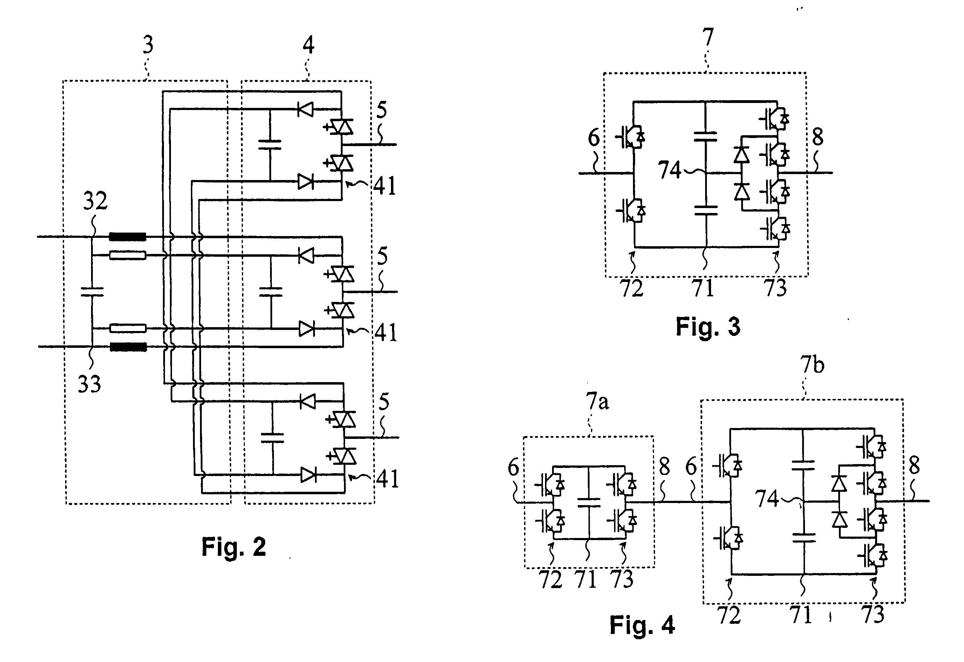

Die erfindungsgemässe Schaltungsanordnung umfasst einen ersten Stromrichter 4, der an eine Gleichspannungsquelle respektive den ersten Gleichspannungszwischenkreis 3 angeschlossen ist. Der erste Stromrichter 4 ist ein Dreipunktwechselrichter, wie in Figur 1 gezeigt, oder ein Zweipunktwechselrichter, wie in Figur 2 gezeigt. Der erste Stromrichter 4 weist mindestens zwei Lastanschlüsse 5 auf. Je Lastanschluss weist der erste Stromrichter 4 vorzugsweise eine Hauptstromrichterbrücke 41 auf. Falls der erste Stromrichter 4 ein Dreipunktwechselrichter ist, weist der erste Gleichspannungszwischenkreis 3 einen ersten Neutralpunkt 31 auf. Mit dem ersten Stromrichter 4 kann mittels der Hauptstromrichterbrücken 41 wahlweise mindestens die positive erste Zwischenkreiskondensatorspannung, die negative erste Zwischenkreiskondensatorspannung oder, im Falle eines Dreipunktwechselrichters, null Volt auf jeden der Lastanschlüsse 5 geschaltet werden.

Die erfindungsgemässe Schaltungsanordnung umfasst mindestens einen zweiten Stromrichter 7, der einen zweiten Gleichspannungszwischenkreis 71 mit einer zweiten Zwischenkreiskondensatorspannung aufweist, welcher parallel zu einer ersten und einer zweiten Umrichterbrücke 72,73 geschaltet ist. Der mindestens eine zweite Stromrichter 7 ist an einen der Lastanschlüsse 5 über einen ersten Brückenanschluss 6 der ersten Umrichterbrücke 72 angeschlossen und über einen zweiten Brückenanschluss 8 der zweiten Umrichterbrücke 73 mit einem wechselspannungsseitigen Anschluss 10 verbunden.

Weiterhin umfasst die erfindungsgemässe Schaltungsanordnung eine Regeleinrichtung, die der gemeinsamen Regelung von mindestens einer Zwischenkreiskondensatorspannung des mindestens einen zweiten Stromrichters und einer Commonmode-Spannung der wechselspannungsseitigen Anschlüsse der Schaltungsanordnung dient, und die Schaltungsanordnung weist Mittel auf, die der Ansteuerung von Halbleiterschaltern des ersten Stromrichters und des mindestens einen zweiten Stromrichters nach Massgabe von Ausgangsgrössen dieser Regeleinrichtung dienen.

In einer bevorzugten Ausführungsform der Erfindung ist zwischen einem zweiten Brückenanschluss 8 und einem zugeordneten wechselspannungsseitigen Anschluss 10 jeweils ein Sinusfilter oder Filter 9 zur Glättung eines Laststromes beziehungsweise einer Lastspannung geschaltet. An den wechselspannungsseitigen Anschlüssen 10 ist eine Last 11, beispielsweise eine elektrische Maschine, angeschlossen. Die Stromrichter respektive ihre Hauptstromrichterbrücken 41, erste Umrichterbrücken 72 und zweite Umrichterbrücken 73 weisen Halbleiterschalter auf, beispielsweise IGCTs (Integrated Gate Commutated Thyristor) oder IGBTs (Insulated Gate Bipolar Transistor).

Figur 2 zeigt einen ersten Stromrichter 4 und einen ersten Gleichspannungszwischenkreis 3 in einer zweiten Ausführungsform. Dabei ist der erste Stromrichter 4 ein Zweipunktstromrichter und der Zwischenkreis 3 einteilig.

Figur 3 zeigt einen zweiten Stromrichter 7 in einer zweiten Ausführungsform. In dieser Ausführungsform ist der zweite Gleichspannungszwischenkreis 71 zweiteilig, mit einem zweiten Neutralpunkt 74, und die zweite Umrichterbrücke 73 ist als Dreipunktwechselrichter ausgebildet. Diese Ausführungsform des zweiten Stromrichters 7 wird als 2/3-Punktstromrichter bezeichnet. Damit ist wahlweise die einfache oder die doppelte zweite Zwischenkreiskondensatorspannung oder null Volt zur Spannung des entsprechenden Lastanschlusses 5 addierbar respektive subtrahierbar. In einer weiteren Variante ist auch die erste Umrichterbrücke 72 als Dreipunktwechselrichter ausgebildet. Prinzipiell sind beliebige Kombinationen von Zwei- und Dreipunktwechselrichtern möglich, insbesondere die Kombinationen, die in der DE-A-196 15 855 beschrieben und beansprucht sind.

Figur 4 zeigt eine Serieschaltung von zwei zweiten Stromrichtern 7a,7b je Lastanschluss gemäss einer weiteren Ausführungsform der Erfindung. Die zweiten Stromrichter 7 sind über ihre ersten Brückenanschlüsse 6 und zweiten Brückenanschlüsse 8 in Serie geschaltet. Es ist also ein erster Brückenanschluss 6 eines ersten zweiten Stromrichters 7a mit einem Lastanschluss 5 verbunden und ein zweiter Brückenanschluss 8 des ersten zweiten Stromrichters 7a mit einem ersten Brückenanschluss 6 des zweiten zweiten Stromrichters 7b verbunden, und ein zweiter Brückenanschluss 8 des zweiten zweiten Stromrichters 7b mit einem Filter 9 respektive einem wechselspannungsseitigen Anschluss 10. Prinzipiell sind die verschiedenen oben beschriebenen Ausführungsformen von zweiten Stromrichtern 7a,7b beliebig miteinander kombinierbar, das heisst der erste zweite und der zweite zweite Stromrichter sind 2-Punkt und/oder 3-Punkt und/oder 2/3-Punktstromrichter.

Mittels des mindestens einen zweiten Stromrichters (7) ist eine oder mehrere von:

- ■ die positive zweite Zwischenkreiskondensatorspannung,
- ■ die negative zweite Zwischenkreiskondensatorspannung oder
- ■ null Volt

zu einem von dem ersten Stromrichter (4) an dessen Lastanschluss (5) geschalteten Spannungswert addierbar. Mit einem Dreipunktwechselrichter ist zusätzlich auch die doppelte zweite Zwischenkreiskondensatorspannung addierbar respektive subtrahierbar. Die addierte Spannung liegt am zweiten Brückenanschluss 8 respektive am entsprechenden wechselspannungsseitigen Anschluss 10 an. Die zweite Zwischenkreiskondensatorspannung ist vorzugsweise von der ersten Zwischenkreiskondensatorspannung verschieden, um eine feinere Spannungsabstufung als eine Spannungsabstufung des ersten Stromrichters 4 an den wechselspannungsseitigen Anschlüssen 10 zu erlauben. Dieses Prinzip der verfeinerten Spannungsabstufung ist in den eingangs erwähnten DE-A-196 15 855 respektive DE-A 197 20 787 weiter erläutert. Der grösste Teil der Ausgangsspannung, das heisst der Spannung an den wechselspannungsseitigen Anschlüssen 10, wird durch den ersten Stromrichter 4 gebildet, welcher langsam taktet und vorzugsweise mit IGCTs (Integrated Gate Commutated Thyristor) ausgerüstet ist. Der kleinere Teil der Ausgangsspannung wird durch die zweiten Stromrichter 7 gebildet, welche beispielsweise pulsdauermoduliert angesteuert werden und mit IGBTs (Insulated Gate Bipolar Transistor) ausgerüstet sind. Eine Schaltfrequenz des ersten Stromrichters 4 beträgt mindestens annähernd 50 bis 300 Hz, eine Schaltfrequenz des zweiten Stromrichters 7 beträgt mindestens annähernd 300 bis 1000 Hz. Eine Grundfrequenz der Ausgangsspannung beträgt beispielsweise 0 bis 60 oder 300 Hz.

In einer beispielhaften Auslegung des ersten Gleichspannungszwischenkreises 3 der Anordnung gemäss Figur 1 mit einer nominalen Zwischenkreiskondensatorspannung des ersten Stromrichters 4 von 2 kV und des zweiten Stromrichters 7 von 1 kV ergeben sich die resultierenden Spannungen an einem wechselspannungsseitigen Anschluss 10 bezüglich des ersten Neutralpunkts 31 gemäss der folgenden Tabelle. Der Begriff "nominale Zwischenkreiskondensatorspannung" bezeichnet eine Spannung auf die ein Zwischenkreiskondensator und der dazugehörige Umrichter ausgelegt sind. Im Falle eines Zweipunktwechselrichters ist dies die gesamte Spannung über dem Zwischenkreis, im Falle eines Dreipunktwechselrichters respektive eines Zwischenkreises mit zwei Kondensatoren und einem Neutralpunkt ist dies die Hälfte der gesamten Spannung über dem Zwischenkreis.

| 1. Stromrichter, am Lastan-schluss 5 | 2. Stromrichter, zwischen erstem Brückenan-schluss 6 und zweitem Brückenanschluss 8 | resultierende Spannung, am zweiten Brückenanschluss 8 respektive am wechselspan-nungsseitigen Anschluss 10 |
|---|---|---|
| +2 kV | +1 kV | +3 kV |
| +2 kV | 0 kV | +2 kV |
| +2 kV | -1 kV | + 1 kV |
| 0 kV | +1 kV | |
| 0 kV | 0 kV | 0 kV |
| 0 kV | -1 kV | -1 kV |
| -2 kV | +1 kV | |
| -2 kV | 0 kV | -2 kV |

(fortgesetzt)

| 1. Stromrichter, am Lastan-schluss 5 | 2. Stromrichter, zwischen erstem Brückenan-schluss 6 und zweitem Brückenanschluss 8 | resultierende Spannung, am zweiten Brückenanschluss 8 respektive am wechselspan-nungsseitigen Anschluss 10 |
|---|---|---|
| -2 kV | -1 kV | -3 kV |

Ein Spannungsverhältnis zwischen den Nominalspannungen des ersten Gleichspannungszwischenkreises 3 und des zweiten Gleichspannungszwischenkreise 71 beträgt dabei 2:1. Es sind damit sieben Stufen der resultierenden Spannung schaltbar. Die Auslegung ist redundant, da zum Teil verschiedenen Schalterkombinationen zur gleichen resultierenden Spannung führen. Die folgende Anordnung mit einem Spannungsverhältnis von 3:1 weist keine Redundanzen und neun Schaltstufen auf:

| 1. Stromrichter | 2. Stromrichter | resultierende Spannung |
|---|---|---|
| +3 kV | +1 kV | +4 kV |
| +3 kV | 0 kV | +3 kV |
| +3 kV | -1 kV | +2 kV |
| 0 kV | +1 kV | +1 kV |
| 0 kV | 0 kV | 0 kV |
| 0 kV | -1 kV | -1 kV |
| -3 kV | +1 kV | -2 kV |
| -3 kV | 0 kV | -3 kV |
| -3 kV | -1 kV | -4 kV |

Wegen der höheren Anzahl Schaltstufen respektive der feineren Spannungsabstufung werden nichtredundante Anordnungen bevorzugt.

Im Betrieb der erfindungsgemässen Schaltungsanordnung tauschen die zweiten Stromrichter 7 Wirkleistung mit sowohl der Last 11 als auch mit dem ersten Stromrichter 4 aus. Erfindungsgemäss weisen die zweiten Stromrichter 7 keine eigenen Mittel zur Versorgung der zweiten Stromrichter 7 mit Energie respektive zur Entnahme von elektrischer Energie aus den zweiten Stromrichtern 7 auf. Sie weisen also ausser dem ersten Brückenanschluss 6 und dem zweiten Brückenanschluss 8 keine weiteren Anschlüsse oder Mittel zur Übertragung von Wirkleistung zum oder vom zweiten Gleichspannungszwischenkreis 71 auf. Wenn jedoch ein zweiter Stromrichter 7 insgesamt mehr Energie respektive Wirkleistung an die Last 11 und/oder den ersten Stromrichter 4 abgibt, sinkt seine zweite Zwischenkreiskondensatorspannung. Umgekehrt steigt die zweite Zwischenkreiskondensatorspannung, wenn der zweite Stromrichter 7 insgesamt Wirkleistung von der Last 11 und/oder dem ersten Stromrichter 4 aufnimmt.

Erfindungsgemäss wird der Austausch von Wirkleistung zwischen dem ersten Stromrichter 4 und den zweiten Stromrichtern 7 derart geregelt, dass die geregelten Spannungen, das heisst die Spannungen der Kapazitäten der Zwischenkreise, annähernd konstant bleiben. Eine gemeinsame Regelung, das heisst eine gemeinsame Regelung aller Stromrichter 4,7 erfasst dabei die geregelten Spannungen und steuert die Stromrichter 4,7 koordiniert an, so dass ein die Stromrichter 4,7 übergreifendes Optimierungskriterium erfüllt wird. Damit dies möglich ist, wird erfindungsgemäss eine Commonmode-Spannung der wechselspannungsseitigen Anschlüsse 10 variiert respektive geregelt.

Falls der erste Stromrichter 4 ein Dreipunktstromrichter ist, weist der erste Gleichspannungszwischenkreis 3 einen ersten Neutralpunkt 31 auf. Eine Gesamtspannung des ersten Gleichspannungszwischenkreises 3 wird beispielsweise durch den Gleichrichter 2 geregelt oder, bei Verwendung eines Diodengleichrichters, ohne Regelung im Wesentlichen konstant gehalten. Eine Neutralpunktspannung des ersten Neutralpunkts 31 muss jedoch auch noch annähernd konstant gehalten werden. In einer bevorzugten Variante der Erfindung wird deshalb auch die Neutralpunktspannung des ersten Zwischenkreises in derselben Weise geregelt, das heisst als geregelte Spannung in die gemeinsame Regelung mit einbezogen.

Der Begriff "Zwischenkreiskondensatorspannung" bezeichnet einen im Betrieb vorkommenden aktuellen Wert einer Spannung über einen Zwischenkreiskondensator. Dieser entspricht entweder einem halben oder einen ganzen Zwischenkreis. Eine Neutralpunktspannung und eine Gesamtspannung eines Zwischenkreises mit Neutralpunkt werden beide ebenfalls als Zwischenkreiskondensatorspannung bezeichnet. Der Begriff "geregelte Spannung" umfasst geregelte Zwischenkreiskondensatorspannungen und die geregelte Commonmode-Spannung.

Die folgende Tabelle zeigt die mit einem 2/3-Punktstromrichter gemäss Figur 3 schaltbaren Spannungsstufen:

| 1. Stromrichter | 2. Stromrichter | resultierende Spannung |
|---|---|---|
| +2.5 kV | +1 kV | +3.5 kV |
| +2.5 kV | +0.5 kV | +3 kV |
| +2.5 kV | 0 kV | +2.5 kV |
| +2.5 kV | -0.5 kV | +2 kV |
| +2.5 kV | -1 kV | +1.5 kV |
| 0 kV | +1 kV | +1 kV |
| 0 kV | +0.5 kV | +0.5 kV |
| 0 kV | 0 kV | 0 kV |
| 0 kV | -0.5 kV | -0.5 kV |
| 0 kV | -1 kV | -1 kV |
| -2.5 kV | +1 kV | -1.5 kV |
| -2.5 kV | +0.5 kV | -2 kV |
| -2.5 kV | 0 kV | -2.5 kV |
| -2.5 kV | -0.5 kV | -3 kV |
| -2.5 kV | -1 kV | -3.5 kV |

Das Spannungsverhältnis zwischen den Nominalspannungen des ersten Gleichspannungszwischenkreises 3 und des zweiten Gleichspannungszwischenkreise 71 beträgt dabei 5:1. Die Tabelle zeigt 15 Schaltstufen und keine Redundanzen. Bei einem Spannungsverhältnis von 4:1 liegen 13 unterschiedliche Stufen (2 redundante Stufen) und bei einem Spannungsverhältnis von 3:1 liegen 11 unterschiedliche Stufen (4 redundante Stufen) vor.

Bei der Serieschaltung von zwei zweiten Stromrichtern 7 je Lastanschluss 5 sind die gleichen Spannungsstufen wie mit einem einzelnen 2/3-Punktstromrichter gemäss Figur 3 schaltbar, falls die in Serie geschalteten zweiten Stromrichter 7 die gleiche nominale Zwischenkreiskondensatorspannung aufweisen.

Sind die nominalen Zwischenkreiskondensatorspannungen von in Serie geschalteten zweiten Stromrichtern 7 unterschiedlich, so sind bis zu 27 Schaltstufen möglich. Die folgende Tabelle gibt, für bevorzugte Ausführungsformen der Erfindung, die Anzahl Schaltstufen in Abhängigkeit der Spannungsverhältnisse der nominalen Zwischenkreiskondensatorspannungen des ersten Stromrichters 4 (Ucm), eines ersten in Serie geschalteten zweiten Stromrichters 7 (Ucs1) und eines zweiten in Serie geschalteten zweiten Stromrichters 7 (Ucs2) an.

| Ucm:Ucs1:Ucs2 | Anzahl Schaltstufen |
|---|---|
| 4:1:1 | 13 |
| 5:1:1 | 15 |
| 6:2:1 | 19 |
| 7:2:1 | 21 |
| 8:3:1 | 25 |
| 9:3:1 | 27 |

Sowohl eine Verwendung von Dreipunktwechselrichtern in den zweiten Stromrichtern 7 wie auch die Serieschaltung mehrerer zweiter Stromrichter 7 erlauben eine gegenüber der Spannungsabstufung des ersten Stromrichters 4 feinere Abstufung der Spannung an den wechselspannungsseitigen Anschlüssen 10. In jedem Fall werden die Spannungen der einzelnen Kapazitäten der zweiten Stromrichter 7 durch die gemeinsame Regelung geregelt.

Zusammengefasst regelt die gemeinsame Regelung die geregelten Spannungen, das heisst die Spannungen der Zwischenkreiskapazitäten der zweiten Stromrichter 7 sowie gegebenenfalls des ersten Stromrichters 4, insbesondere die Neutralpunktspannung. Dazu werden Messwerte der geregelten Spannungen durch geeignete Spannungsmessgeräte bestimmt.

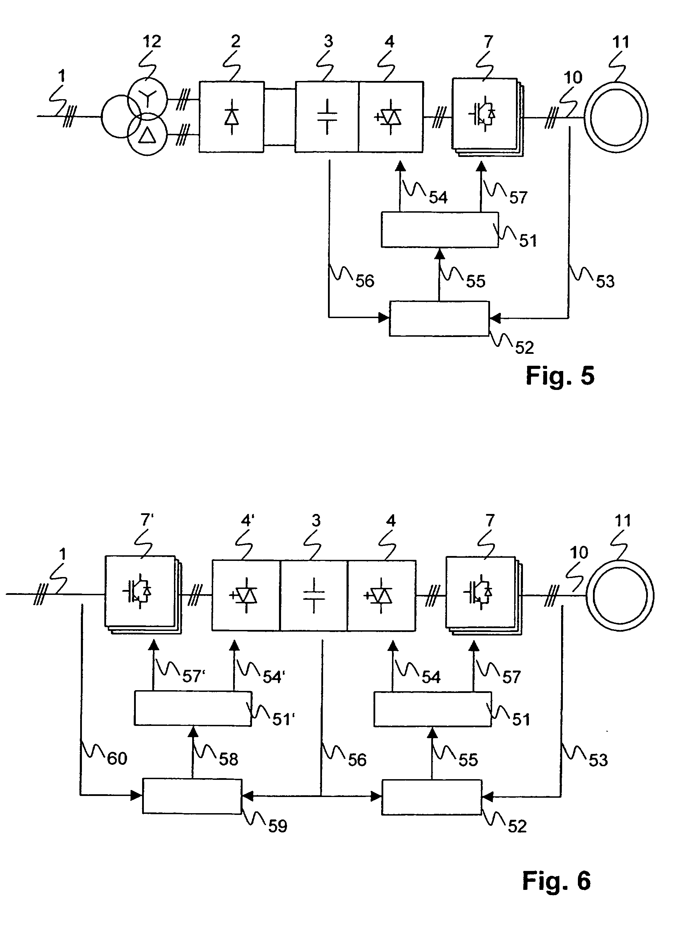

Figur 5 zeigt ein Regelschema einer erfindungsgemässen Regelung in Verbindung mit einer erfindungsgemässen Schaltungsanordnung gemäss Figur 1. Die erfindungsgemässe gemeinsame Regelung funktioniert wie folgt: Eine übergeordnete Lastregelung 52 erfasst eine oder mehrere Zwischenkreisspannungswerte 56 der Zwischenkreiskapazitäten des ersten Gleichspannungszwischenkreises 3 sowie Ausgangsspannungswerte 53 an den wechselspannungsseitigen Anschlüssen 10. Die übergeordnete Lastregelung 52 gibt einem Zwischenkreisspannungsregler 51 Lastspannungssollwerte 55 vor, welche relativ zueinander an den wechselspannungsseitigen Anschlüssen 10 anliegen müssen, um die Last 11, welche insbesondere ein Antriebsmotor ist, in gewünschter Weise anzusteuern. Durch eine Vorgabe der Ausgangsspannung an den wechselspannungsseitigen Anschlüssen 10 ist bei einer nichtredundanten Auslegung der erfindungsgemässen Schaltungsanordnung die Ansteuerung der Schalter der Stromrichter respektive ein Modulationsgrad einer Pulsbreitenmodulation der zweiten Stromrichter 7 eindeutig gegeben.

Erfindungsgemäss wird im Zwischenkreisspannungsregler 51 zu den Lastspannungssollwerten 55 für jede Phase eine gemeinsame, sogenannte Commonmode-Spannung, addiert, um den Wirkleistungsfluss zwischen den Umrichtern respektive um die geregelten Spannungen der Zwischenkreiskapazitäten zu beeinflussen. Die Summen der Lastspannungssollwerte 55 und der Commonmode-Spannung werden modifizierte Lastspannungssollwerte genannt. Anhand der modifizierten Lastspannungssollwerte wird im Zwischenkreisspannungsregler 51 ein Modulationsgrad 54 des ersten Stromrichters 4 und werden Modulationsgrade 57 der zweiten Stromrichter 7 bestimmt, so dass an den wechselspannungsseitigen Anschlüssen 10 die modifizierten Lastspannungssollwerte auftreten. Dazu werden Spannungen von vorzugsweise allen Zwischenkreiskondensatoren des ersten Stromrichters 4 und der zweiten Stromrichter 7 gemessen und im Zwischenkreisspannungsregler 51 mit verarbeitet.

Es werden die folgenden Begriffe verwendet: Eine *maximale Umrichterausgangsspannung* ist gleich einer Summe der Zwischenkreiskondensatorspannungen der in Serie geschalteten ersten und zweiten Stromrichter. Ein *Aussteuerungsgrad* ist gleich dem Verhältnis zwischen aktueller und maximaler Umrichterausgangsspannung für einen stationären Betriebspunkt des ganzen Umrichters, wobei als aktuelle Umrichterausgangsspannung die Amplitude einer Ausgangsspannungsgrundschwingung betrachtet wird. Der Aussteuerungsgrad wird in Prozenten von 0 bis 100% angegeben. Ein *Modulationsgrad* ist das Verhältnis zwischen momentaner und maximaler Umrichterausgangsspannung. Dies wird für die Momentanwerte einer Phasenspannung, für den ganzen oder für einen Teilumrichter definiert und weist einen Wert zwischen -1 und +1 auf.

Die Commonmode-Spannung hat keinen wesentlichen Einfluss auf die Last 11. Sie soll jedoch möglichst klein sein und sich langsam ändern, um unter anderem eine Spannungsbelastung von Motorwicklungen gegenüber Erdpotential zu vermindern. Für das Verhalten der Last 11 massgebend sind lediglich die Differenzen der Spannungen an den wechselspannungsseitigen Anschlüssen 10, auch "Differential Mode" genannt.

Aus diesem Grund bietet die Commonmode-Spannung einen Freiheitsgrad in der Ansteuerung der Last 11. Erfindungsgemäss wird dieser Freiheitsgrad genutzt, um den Lastfluss zwischen den Umrichtern und die Zwischenkreiskondensatorspannungen zu beeinflussen. Dabei sind Momentanwerte der Zwischenkreiskondensatorspannungen nicht steuerbar, sondern es lässt sich nur ein zeitlicher Mittelwert einer jeden Zwischenkreiskondensatorspannung über eine Grundschwingungsperiode der Ausgangsspannungen regeln. Auch kann nicht der volle Aussteuerungsgrad von 100% erreicht werden, da dafür in Serie geschaltete erste und zweite Stromrichter 4,7 dauernd Energie abgeben müssten. Als maximaler Aussteuerungsgrad ist ein Wert von annähernd 82% erreichbar (Amplitude der Ausgangsspannung im Verhältnis zur Summe der Zwischenkreiskondensatorspannungen der in Serie geschalteten ersten und zweiten Stromrichter 4,7).

Der Einfluss der Commonmode-Spannung auf die geregelten Spannungen der Zwischenkreiskapazitäten hängt vom jeweiligen Betriebspunkt der Schaltungsanordnung ab. Die gemeinsame Regelung, welche vorzugsweise eine Abtastregelung ist, weist deshalb ein mathematisches Umrichtermodell des ersten und des zweiten Stromrichters 4,7 auf. Dieses Modell beschreibt eine Änderung der Zwischenkreiskondensatorspannungen in Abhängigkeit der Commonmode-Spannung und weiterer Anlagengrössen, das heisst der vorgegebenen Lastspannungen und von vorzugsweise gemessenen Lastströmen je Phase:

$$\dot{\hat{U}}_j[k] = -\hat{I}_j\left(u_h[k], \bar{u}_{mot,ref}[k], \bar{i}_{mot}[k]\right) C_j \qquad j \in \{Cnp, Ca, Cb, Cc\} \quad (1)$$

$$\hat{U}_j[k+1] = U_j[k] + \dot{\hat{U}}_j[k] \cdot \Delta t \qquad j \in \{Cnp, Ca, Cb, Cc\} \quad (2)$$

Dabei bezeichnet [*k*] den Wert einer Grösse zum *k*-ten betrachteten Zeitpunkt der Abtastregelung. Geschätzte respektive berechnete Werte sind im Gegensatz zu gemessenen oder vorgegebenen Werten mit einem Dachsymbol wie beispielsweise in *Ü* markiert. Es ist *j* ∈ {*Cnp,Ca,Cb,Cc*} ein Index über die betrachteten Kapazitäten mit den geregelten Zwischenkreiskondensatorspannungen, insbesondere bezieht sich *Cnp* auf die Spannung am ersten Neutralpunkt 31, und *Ca,Cb,Cc* auf die Spannungen der Kapazitäten der zweiten Gleichspannungszwischenkreise 71 der mit *a, b,* und *c* bezeichneten Phasen. *Cnp* ist gleich der Summe der beiden Kapazitäten des ersten Gleichspannungszwischenkreises 3.

Es ist

♦ $u_h$       eine Variable, die alle möglichen Werte ⌊$u_{h,\min}...u_{h,\max}$⌋ der Commonmode-Spannung abdeckt,

♦ $\vec{u}_{mot,ref}$     ein Vektor der vorgegebenen Lastspannungen,

♦ $\vec{i}_{mot}$     ein Vektor der Lastströme,

♦ $\hat{I}_j$     ein Vektor der geschätzten Ströme in die betrachteten Kapazitäten,

♦ $C_j$     ein Vektor der betrachteten Kapazitäten,

♦ $U_j$     ein Vektor der Spannungen der betrachteten Kapazitäten,

♦ $\hat{U}_j$     ein geschätzter Wert von $U_j$,

♦ $\dot{\hat{U}}_j$       eine geschätzte zeitliche Ableitung von $U_j$, und

♦ *Δt*     eine Dauer eines Abtastzeitschrittes.

Die Bestimmung von $\hat{I}_j$ aus $u_h[k]$ und $\vec{u}_{mot,ref}[k]$ und $\vec{i}_{mot,refmot}[k]$ beinhaltet den wesentlichen Teil des Umrichtermodells. Das Modell wird in folgender Weise anhand einer idealisierten Betrachtung des Umrichters erhalten:

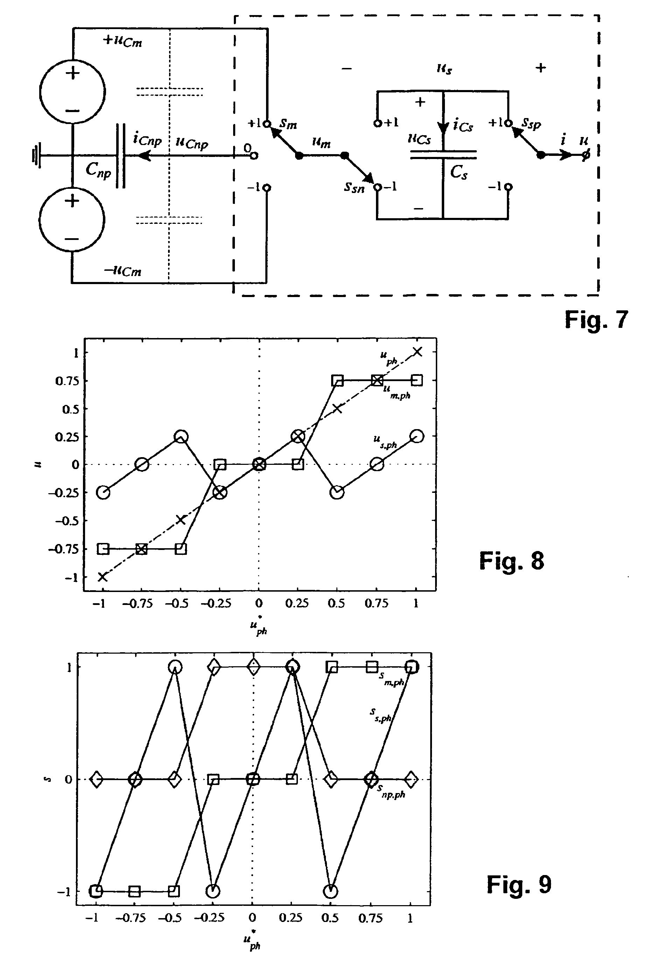

Figur 7 zeigt für eine Schaltungsanordnung gemäss Figur 1 ein idealisiertes Ersatzschaltbild des Gleichrichters 2, des ersten Gleichspannungszwischenkreises 3, des ersten Stromrichters 4 und eines der zweiten Stromrichter 7.

Im Ersatzschaltbild sind die Umrichterbrücken als Schalter oder Umschalter modelliert, und sind die beiden Zwischenkreiskondensatoren des ersten Gleichspannungszwischenkreis 3 zu einer Ersatzkapazität *Cnp* des ersten Neutralpunkts 31 zusammengefasst. Eine positive respektive negative Zwischenkreisspannung des ersten Gleichspannungszwischenkreises 3 beträgt + $u_{Cm}$ respektive -$u_{Cm}$, eine Spannung des ersten Neutralpunkts 31 beträgt + $u_{Cnp}$. Die Schalter der Hauptstromrichterbrücke 41 werden mit einer Pulsbreitenmodulation mit einem Modulationsgrad $s_m$ angesteuert. Der Modulationsgrad $s_m$ nimmt Werte zwischen +1 und -1 an, wobei eine Spannung $u_m$ am betrachteten Lastanschluss 5 des ersten Stromrichters 4 für $s_m$ =+1 gleich + $u_{Cm}$ ist, und für $s_m$ =-1 gleich -$u_{Cm}$ ist. Für dazwischenliegende Werte von $s_m$ werden entsprechende Werte von $u_m$ linear interpoliert.

Der zweite Stromrichter 7 mit einer Zwischenkreiskondensatorspannung $u_{Cs}$ wird mit einem Modulationsgrad $S_s$ angesteuert. Der Modulationsgrad $S_s$ nimmt Werte zwischen +1 und -1 an, wobei eine Spannung $u_s$ zwischen dem ersten Brückenanschluss 6 und dem zweiten Brückenanschluss 8 des zweiten Stromrichters 7 für $S_s$ =+1 gleich + $u_{Cs}$ ist, und für $S_s$ =-1 gleich -$u_{Cs}$ ist. Der Modulationsgrad $S_s$ setzt sich aus einem Modulationsgrad $S_{sn}$ der ersten Umrichterbrücke 72 und einem Modulationsgrad $S_{sp}$ der zweiten Umrichterbrücke 73 zusammen, wobei

$$s_s = \frac{s_{sp} - s_{sn}}{2}$$

ist. Grundsätzlich sind bei gegebenem Modulationsgrad $s_s$ beliebige Werte für $s_{sp}$ und $s_{sn}$ wählbar, die die obige Gleichung erfüllen. Vorzugsweise wird jedoch aus $s_{sn}$ =-$s_{sp}$ gewählt. Dadurch werden Schalt- und Durchlassverluste gleichmässig verteilt.

Eine Trägerfrequenz der Pulsbreitenmodulation ist wesentlich grösser als eine Grundfrequenz einer Ausgangsspannung der Schaltungsanordnung, so dass die Umrichter als kontinuierliche Vorrichtungen modellierbar sind, wie im Artikel "PWM-control of multi-level voltage-source inverters", M. Veenstra und A. Rufer, Proceedings of the Power Electronics Specialists Conference, vol. 3, pp. 1387-1393, IEEE, 2000, beschrieben.

Figur 8 zeigt einen Verlauf von Umrichterspannungen einer einzelnen Phase für variierende Modulationsgrade des ersten Stromrichters 4 und des entsprechenden zweiten Stromrichters 7. Darin ist $u_{ph}$ die Spannung am entsprechenden zweiten Brückenanschluss 8, also die Summe von einem Spannungswert $u_{m,ph}$ des ersten Stromrichters 4 und einem Spannungwert $u_{s,ph}$ des zweiten Stromrichters 7. Ein zusätzlicher Index *ph* der genannten Spannungen deutet an, dass es sich um Grössen einer bestimmten Phase handelt. Die angegebenen Spannungen entsprechen denjenigen aus der oben angegebenen Tabelle für die Anordnung mit einem Spannungsverhältnis von 3:1 mit neun Schaltstufe, normiert auf eine maximale resultierende Spannung von 4kV. Tabellenwerte der Spannung des ersten Stromrichters 4 sind durch Quadrate markiert, Tabellenwerte der Spannung des zweiten Stromrichters durch Kreise und Tabellenwerte der Summenspannung durch Kreuze. Der Verlauf der Spannungen zwischen den Tabellenwerten wird durch lineare Interpolation Interpolation bestimmt.

Figur 9 zeigt einen Verlauf von Modulationsgraden von Umrichterbrücken zur Erzeugung der Umrichterspannungen gemäss Figur 8. Darin ist auch ein Verlauf eines Modulationsgrads $s_{np}$ des ersten Neutralpunkts 31 dargestellt. $s_{np}$ ist definiert als relative zeitliche Häufigkeit mit welcher der erste Neutralpunkt 31 an den Lastanschluss 5 geschaltet ist. Somit ist $s_{np}$ unmittelbar von $s_m$ abhängig. Werte von $s_{np}$ verschiedener Phasen werden zu einem Vektor $\vec{s}_{np}$ zusammengefasst.

Die Kurven der Figuren 8 und 9 repräsentieren eindeutige Beziehungen, welche jedem Wert $u_{ph}$ einer Spannung an einem zweiten Brückenanschluss 8 respektive an einem wechselspannungsseitigen Anschluss 10 ein Paar von Spannungswerten $u_{m,ph}$, $u_{s,ph}$ des ersten und zweiten Stromrichters 4,7 sowie ein Tripel von Modulationsgraden $s_m$, $s_s$, $s_{np}$ zuordnen. Anhand dieser Modulationsgrade werden die geschätzten Ströme $\hat{I}_j$ in die betrachteten Zwischenkreiskapazitäten zum $k$-ten betrachteten Zeitpunkt als

$$\hat{i}_{C_{np}}[k] = -\vec{i}_{mot}[k] \cdot \vec{s}_{np}[k] \qquad (3)$$

$$\hat{i}_{C_{s,ph}}[k] = -i_{ph}[k]\, s_{s,ph}[k] \quad \forall ph \in \{a,b,c\} \qquad (4)$$

bestimmt. Gleichung (3) bedeutet, dass ein Strom der Ersatzkapazität gleich der Summe der Lastströme ist, jeweils multipliziert mit dem Modulationsgrads $s_{np}$ des ersten Neutralpunkts 31 bezüglich der Phase des jeweiligen Laststroms. Gleichung (4) bedeutet, dass für jede Phase $a,b,c$ eines dreiphasigen Systems sich ein Strom der Zwischenkreiskapazität des zweiten Stromrichters 7 der betreffenden Phase aus dem Laststrom $i_{ph}$ der Phase, multipliziert mit dem Modulationsgrad $s_{s,ph}$ des zweiten Stromrichters 7 der Phase, bestimmt.

In den Gl. 2 und 5 ist k+1 verwendet, weil es sich dabei um eine Vorhersage der Kondensatorspannungen für den nächsten Abtastzeitpunkt handelt. In den Gl. 3 und 4 ist k verwendet, weil es sich um gemessene und berechnete Ströme und einzustellende Modulationsgrade zu diesem Abtastzeitpunkt handelt. Diese Werte aus Gl. 3 und 4 werden sich aber im Zeitintervall bis zum nächsten Abtastzeitpunkt nicht oder nicht wesentlich ändern). Ähnliches gilt für Gl. 6-9.

Eine Abweichung der geregelten Zwischenkreiskondensatorspannungen von vorgegeben, vorzugsweise konstanten Idealwerten $U_{j,ref}$ beträgt

$$\varepsilon \hat{U}_j = \hat{U}_j[k+1] - U_{j,ref} \qquad\qquad j \in \{Cnp, Ca, Cb, Cc\} \quad (5)$$

Diese Spannungsabweichungen sollen durch die Regelung möglichst klein gehalten werden. Ebenso sollen die Commonmode-Spannung und eine zeitliche Änderung $\dot{u}_h$ der Commonmode-Spannung möglichst klein gehalten werden.

$$u_h = u_h[k] \qquad (6)$$

$$\dot{u}_h = (u_h[k] - u_h[k-1])/\Delta t \qquad (7)$$

Dazu wird eine Kostenfunktion durch Summation der Quadrate der obigen Abweichungen gebildet:

$$K(u_h[k]) = k_{uh}(u_h)^2 + k_{duh}(\dot{u}_h)^2 + \sum_j \left(\varepsilon \hat{U}_j\right)^2 \qquad j \in \{Cnp, Ca, Cb, Cc\} \quad (8)$$

Gewichtungsfaktoren $k_{uh}$ und $k_{duh}$ variieren die Gewichtung von Abweichungen der Commonmode-Spannung respektive ihrer Änderung gegenüber Abweichungen der geregelten Spannungen. Es wird diejenige Commonmode-Spannung gewählt, welche die Kostenfunktion minimiert.

$$u_h[k] = u_h[k]\big|_{K(u_h[k])=\min(K)} \qquad (9)$$

Zur Minimierung der Kostenfunktion wird ein bekanntes Minimierungsverfahren verwendet. Solche Verfahren sind beispielsweise in einer Optimierungs-"Toolbox" des mathematischen Softwarepaketes MATLAB™ von The MathWorks Inc, implementiert.

In der Optimierung wird also jene Commonmode-Spannung ausgewählt, welche eine gewichtete Summe der Quadrate der Abweichungen der geregelten Spannungen von einem jeweiligen Sollwert minimiert. Die Gewichtungsfaktoren $k_{uh}$ und $k_{duh}$ sind derart, dass die Zwischenkreiskondensatorspannungen im zeitlichen Mittelwert auf im Wesentlichen konstante Werte geregelt werden und eine Variation der Commonmode-Spannung von beispielsweise maximal annähernd 30% der maximalen Umrichterausgangsspannung zugelassen wird.

Im praktischen Betrieb treten Schwingungen der momentanen Werte der Spannungen der Kapazitäten um bis zu annähernd 10% um eine Nennspannung der jeweiligen Kapazität auf.

Das erfindungsgemässe Verfahren weist also die folgenden Schritte auf:

a) Vorgabe von $\vec{u}_{mot,ref}[k]$ durch eine übergeordnete Regelung 52,59.
b) Messung von $i_{mot}[k]$.

c) Voraussage einer Änderung der geregelten Zwischenkreiskondensatorspannungen in Abhängigkeit der Commonmode-Spannung und weiterer Anlagengrössen durch ein Umrichtermodell einer Abtastregelung in einem ersten Abtastzeitpunkt. Dazu wird $\hat{U}_j$ gemäss Gl. (1) bestimmt, indem

1. $u_h[k]$ durch das Optimierungsverfahren vorgegeben wird,
2. $u_{mot,ref}[k]$ und $i_h[k]$ addiert werden, woraus sich für jede Phase die modellierte Ausgangsspannung $u_{ph}$ ergibt,
3. für jede Phase Modulationsgrade $s_m$, $s_s$, $s_{np}$ entsprechend den Beziehungen gemäss den Figuren 8 und 9 bestimmt werden,
4. anhand von Gl. (3) und (4) die geschätzten Ströme $\hat{I}_j$ in die betrachteten Zwischenkreiskapazitäten bestimmt werden,

5. anhand von Gl. (1) die geschätzte zeitliche Ableitung $\dot{\hat{U}}_j$ von $U_j$ bestimmt wird,

6. anhand von Gl. (2) die Änderung $\dot{\hat{U}}_j[k] \cdot \Delta t$ von $U_j$ und der neue geschätzte Wert $\hat{U}_j[k+1]$ bestimmt werden.

d) Bestimmung einer Commonmode-Spannung, welche in mindestens einem nächsten Abtastzeitpunkt die Kostenfunktion gemäss den Gl. (5-8) minimiert, mittels einer Optimierung. Dabei wird Schritt c) wiederholt ausgeführt, wobei $u_h[k]$ durch das Optimierungsverfahren variiert wird.

e) Addieren der in Schritt d) bestimmten optimierten Commonmode-Spannung zu zur Lastansteuerung vorgegebenen Lastspannungssollwerten 55,58 der wechselspannungsseitigen Anschlüsse 10, wodurch sich modifizierte Lastspannungssollwerte der jeweiligen wechselspannungsseitigen Anschlüsse 10 ergeben,

f) Ansteuern respektive Modulieren des ersten Stromrichters 4 und des mindestens einen zweiten Stromrichters 7

anhand dieser modifizierten Lastspannungssollwerte.

Falls die Schaltungsanordnung keine redundanten Schaltzustände aufweist, treten mit der erfindungsgemässen Regelung Schwingungen der geregelten Spannungen um den Sollwert auf. Die Regelung stabilisiert dabei die Mittelwerte der Spannungen über eine Grundschwingungsperiode und minimiert die Amplitude der Spannungsschwingungen, was für den Betrieb der Schaltungsanordnung ausreichend ist. Die Amplituden der Schwingungen hängen von den Werten der jeweiligen Kapazitäten und von der übertragenen Wirkleistung ab. Beispielsweise ergibt sich bei einem Umrichter mit einer Leistung von 1.4 MVA mit Kondensatorspannungen von 3 respektive 1 kV, einem Spannungsverhältnis von 3:1 und neun Schaltstufen, wobei die Kapazität des ersten Gleichspannungszwischenkreises 3 insgesamt 775 Mikrofarad und die Kapazität eines einzelnen zweiten Stromrichters 7 je 4650 Mikrofarad beträgt, eine Schwingung der Neutralpunktspannung und der Zwischenkreiskondensatorspannungen der zweiten Stromrichter 7 von jeweils maximal 10% um ihren Nominalwert. Dabei beträgt eine Energiespeicherkapazität des ersten Gleichspannungszwischenkreises 3 insgesamt 5 Ws/kVA und eine Energiespeicherkapazität aller zweiten Stromrichter 7 insgesamt ebenfalls 5 Ws/kVA. Die Variation der Commonmode-Spannung beträgt maximal etwa 30% der maximalen Umrichterausgangsspannung.

Die erfindungsgemässe Schaltungsanordnung eignet sich für neue Anlagen, aber auch zum Nachrüsten bestehender Antriebe. Um einen Antrieb gegen die erhöhte Commonmode-Spannung zu schützen wird eine Wickelkopfisolation beispielsweise durch Aufsprühen eines Glimmschutzes verbessert.

Bei Frequenzen der Lastspannung, welche unter einer Nominalfrequenz liegen, wird in bekannter Weise bei der Speisung eines Motors auch die Amplitude der Lastspannung abgesenkt. Bei diesen tieferen Spannungen an den wechselspannungsseitigen Anschlüssen 10 wird die Regelung der Zwischenkreiskondensatorspannungen schwieriger. In diesem Fall berücksichtigt die Optimierung der Regelung bevorzugterweise eine Vorhersage des Umrichterverhaltens über zwei oder mehrere Abtastschritte. Die Kostenfunktion beinhaltet dabei die Summe der Quadrate der betrachteten Abweichungen bei jedem der Abtastschritte. Entsprechende Optimierungsverfahren sind aus dem Gebiet der modellprädiktiven Regelung ("Model Predictive Control") bekannt.

In einer bevorzugten Variante der Erfindung weist die Kostenfunktion auch mindestens einen Term mit dem zeitlichen Integral einer der betrachteten Spannungsabweichungen auf. Damit wird eine stationäre Abweichung der entsprechenden Spannung von ihrem Sollwert eliminiert.

Für andere Varianten der Schaltungsanordnung wird das erfindungsgemässe Verfahren sinngemäss angepasst. Beispielsweise entfällt, falls der erste Stromrichter 4 ein Zweipunktstromrichter ist, der Term $\varepsilon\hat{U}_{NP}$ der Kostenfunktion.

In einer weiteren Ausführungsform der Erfindung ist die erfindungsgemässe Schaltungsanordnung zwischen dem Energieversorgungsnetz 1 und dem ersten Gleichspannungszwischenkreis 3 angeordnet und dient also hauptsächlich als rückspeisefähiger Gleichrichter zur Speisung des ersten Gleichspannungszwischenkreises 3. In dieser Anwendung regelt die gemeinsame Regelung die Gesamtspannung des ersten Zwischenkreises anstelle des Betriebspunktes der Last. Den Lastströmen $\vec{i}_{mot}$ entsprechen hier Netzströme, und an die Stelle der übergeordneten Lastregelung 52 tritt eine netzseitige Regelung 59.

Figur 6 zeigt ein Regelschema einer erfindungsgemässen Regelung in Verbindung mit dieser weiteren Ausführungsform. Der Gleichrichter 2 und Netztransformator 12 werden also durch einen weiteren ersten Stromrichter 4' und einen weiteren zweiten Stromrichter 7' ersetzt. Wechselspannungsseitige Anschlüsse 10 der weiteren zweiten Stromrichter 7' sind am Energieversorgungsnetz 1 ohne einen Transformator angeschlossen. Die weiteren ersten und zweiten Stromrichter 4',7' werden mittels eines weiteren Modulationsgrads 54' des weiteren ersten Stromrichters 4' respektive weiterer Modulationsgrade 57' der weiteren zweiten Stromrichter 7' angesteuert. Diese Modulationsgrade werden durch einen weiteren Zwischenkreisspannungsregler 51' anhand von netzseitigen Ausgangsspannungssollwerten 58 erzeugt, welche wiederum durch eine netzseitige Regelung 59 erzeugt werden. Die netzseitige Regelung 59 bestimmt die netzseitigen Ausgangsspannungssollwerte 58 anhand von gemessenen Zwischenkreisspannungswerten 56 und Netzspannungswerten 60. Die netzseitige Regelung 59 kann die Netzspannung nicht beeinflussen sondern steuert den Leistungsfluss in den erster Gleichspannungszwischenkreis 3, so dass dessen Gesamtspannung im wesentlichen konstant gehalten wird.

Das Energieversorgungsnetz 1 weist eine konstante Spannung und Frequenz auf, die dem Nennbetriebspunkt des weiteren ersten Stromrichters 4' in Kombination mit dem weiteren zweiten Stromrichter 7' entsprechen. Diese werden also immer mindestens annähernd in diesem Betriebspunkt betrieben, wobei die netzseitige Commonmode-Spannung durch den weiteren Zwischenkreisspannungsregler 51' sehr klein gehalten werden kann, beispielsweise auf maximal 5% der maximalen Umrichterausgangsspannung.

Spannungen von vorzugsweise allen Zwischenkreiskondensatoren des weiteren ersten Stromrichters 4' und der weiteren zweiten Stromrichter 7' werden gemessen und im weiteren Zwischenkreisspannungsregler 51' mit verarbeitet.

Falls die Schaltungsanordnung zwischen Energieversorgungsnetz 1 und dem ersten Gleichspannungszwischenkreis 3 angeordnet ist entspricht die Frequenz der Spannungen der wechselspannungsseitigen Anschlüsse 10 einer konstanten Netzfrequenz. In diesem Fall wird die Commonmode-Spannung sehr klein, das heisst maximal annähernd 5% der maximalen Umrichteraussteuerung.

Zusammengefasst regelt der Zwischenkreisspannungsregler 51 die Neutralpunktspannung des ersten Gleichspannungszwischenkreises 3, die Zwischenkreiskondensatorspannungen der zweiten Stromrichter 7 und die Commonmode-Spannung an der Last 11, und regelt der weitere Zwischenkreisspannungsregler 51' die Neutralpunktspannung des ersten Gleichspannungszwischenkreises 3, die Zwischenkreiskondensatorspannungen der weiteren zweiten Stromrichter 7' und die Commonmode-Spannung bezüglich des Netzes 1.

Für die Regelung der Neutralpunktspannung des ersten Gleichspannungszwischenkreises 3 bestehen verschiedene Möglichkeiten:

1. Der erste Gleichspannungszwischenkreis 3 weist zwei unabhängige, das heisst nicht verbundene Neutralpunkte auf, mit einem Neutralpunkt an der Netzseite und einem an der Lastseite. Die Leistung wird, wie beim Diodengleichrichter, nur über den ersten Pluspol 32 und den ersten Minuspol 33 übertragen. Jede Seite regelt ihre eigene Neutralpunktspannung.

2. Nur eine der beiden Seiten regelt eine gemeinsame Neutralpunktspannung, die andere Seite berücksichtigt ihn nicht bei der Optimierung.

3. Beide Seiten berücksichtigen die Neutralpunktspannung und versuchen sie nicht zu weit von ihrem Sollwert abweichen zu lassen. Beispielsweise wird die Neutralpunktspannung in beiden Optimierungen mit reduzierter Gewichtung berücksichtigt, damit sie nicht zu stark geregelt wird. Die Gewichtung ist beispielsweise für beide Seiten verschieden.

4. Die Schaltungsanordnung weist einen globalen Zwischenkreisspannungsregler auf, der eine Kostenfunktion unter Einbezug aller Zwischenkreisspannungen und beider Commonmode-Spannungen der ganzen Schaltungsanordnung von Figur 5 minimiert.

Mit der weiteren Ausführungsform der Erfindung gemäss Figur 5 lässt sich die Schaltungsanordnung ohne Netztransformator einsetzen, was eine grosse Vereinfachung bedeutet. Selbstverständlich lässt sich die erfindungsgemässe Schaltungsanordnung auch als nur netzseitige Schaltungsanordnung 7',4',3 mit einem Gleichspannungsverbraucher und ohne die lastseitige Schaltungsanordnung 4,7 einsetzen.

Falls die zweiten Stromrichter 7 Dreipunktwechselrichter enthalten und/oder falls pro Phase mehrere zweite Stromrichter 7 in Serie geschaltet sind, so enthält die Kostenfunktion entsprechend für jede zusätzliche Kapazität respektive jede geregelte Spannung mindestens einen zusätzlichen Term.

Falls die Schaltungsanordnung Redundanzen aufweist, berücksichtigt die Optimierung auch redundante Schaltzustände. Da dabei einer vorgegebenen Commonmode-Spannung nicht eindeutig eine einzige Ansteuerung der Umrichter entspricht, findet eine mehrdimensionale Optimierung statt. Das heisst, dass die Optimierung sowohl die Commonmode-Spannung als auch die redundanten Schaltzustände variiert. Dabei reduziert die Optimierung sowohl die Commonmode-Spannung als auch eine Anzahl von Schaltvorgängen, also von Ein- oder Ausschaltvorgängen von Halbleiterschaltern. Prinzipiell kann dabei dank der redundanten Schaltzustände die Commonmode-Spannung stärker reduziert und/oder die Anzahl von Schaltvorgängen reduziert werden. Um Schaltverluste zu minimieren wird in einer bevorzugten Variante der Erfindung die Anzahl von Schaltvorgängen minimiert und eine Variation der Commonmode-Spannung zugelassen.

**Bezugszeichenliste**

| | |
|---|---|
| 1 | Energieversorgungsnetz |
| 2 | Gleichrichter |
| 3 | erster Gleichspannungszwischenkreis |
| 4 | erster Stromrichter |
| 4' | weiterer erster Stromrichter |
| 5 | Lastanschluss des ersten Stromrichters |
| 6 | erster Brückenanschluss |
| 7 | zweiter Stromrichter |
| 7' | weiterer zweiter Stromrichter |
| 7a | erster zweiter Stromrichter |
| 7b | zweiter zweiter Stromrichter |
| 8 | zweiter Brückenanschluss |
| 9 | Filter |

10    wechselspannungsseitiger Anschluss
11    Last
12    Netztransformator
31    erster Neutralpunkt
32    erster Pluspol
33    erster Minuspol
41    Hauptstromrichterbrücke
51    Zwischenkreisspannungsregler
51'   weiterer Zwischenkreisspannungsregler
52    übergeordnete Lastregelung
53    Ausgangsspannungswerte
54    Modulationsgrad des ersten Stromrichters
54'   weiterer Modulationsgrad des weiteren ersten Stromrichters
55    Lastspannungssollwerte
56    Zwischenkreisspannungswerte
57    Modulationsgrade der zweiten Stromrichter
57'   weitere Modulationsgrade der weiteren zweiten Stromrichter
58    netzseitige Ausgangsspannungssollwerte
59    netzseitige Regelung
60    Netzspannungswerte
71    zweiter Gleichspannungszwischenkreis
72    erste Umrichterbrücke
73    zweite Umrichterbrücke
74    zweiter Neutralpunkt

## Patentansprüche

1. Leistungselektronische Schaltungsanordnung zur Übertragung von Wirkleistung von einer Gleichspannungsselte an mindestens zwei wechselspannungsseitige Anschlüsse (10) oder umgekehrt, umfassend einen ersten Stromrichter (4), der an eine Gleichspannungsquelle mit einer ersten Zwischenkreiskondensatorspannung angeschlossen ist und mindestens zwei Lastanschlüsse (5) aufweist,
und mindestens einen zweiten Stromrichter (7), der an einen der Lastanschlüsse (5) angeschlossen Ist und mit einem wechselspannungsseitigen Anschluss (10) verbunden ist, und der eine zweite Zwischenkreiskondensatorspannung aufweist und wobei mittels des zweiten Stromrichters (7) eine oder mehrere von: die positive zweite Zwischenkreiskondensatorspannung, die negative zweite Zwlschenkrelskondensatorspannung oder null Volt zu einem von dem ersten Stromrichter (4) an dessen Lastanschluss (5) geschalteten Spannungswert addierbar ist, wobei der mindestens eine zweite Stromrichter (7) zur Versorgung mit elektrischer Energie und zur Entnahme von elektrischer Energie einem weiteren Anschluss als einen ersten Brüchenanschluss (6) des ersten Umrichterbrücke an einem der Lastanschlüsse (5) und einem zweiten Brückenanschluss (8) der zweiten Umrichterbrücke an einem wechselseitigen Anschluss (10) aufweist,
**dadurch gekennzeichnet,**
**dass** die Schaltungsanordnung eine Regeleinrichtung (51,51') aufweist, die der gemeinsamen Regelung von mindestens einer Zwischenkreiskondensatorspannung des mindestens einen zweiten Stromrichters (7) und einer Commonmode-Spannung der wechselspannungsseitigen Anschlüsse (10) der Schaltungsanordnung dient, und
**dass** die Schaltungsanordnung Mittel aufweist, die der Ansteuerung von Halbleiterschaltern des ersten Stromrichters (4) und des mindestens einen zweiten Stromrichters (7) nach Massgabe von Ausgangsgrössen dieser Regeleinrichtung (51,51') dienen.

2. Schaltungsanordnung nach Anspruch 1, **dadurch gekennzeichnet, dass** die Regeleinrichtung (51,51') zur Regelung einer Zwischenkreiskondensatorspannung des ersten Stromrichters (4) ausgebildet ist.

3. Schaltungsanordnung nach Anspruch 1 oder 2, **dadurch gekennzeichnet, dass** die Regeleinrichtung zur Minimierung einer gewichteten Summe der Quadrate der Abweichungen der geregelten Zwischenkreiskondensatorspannungen, der Commonmode-Spannung und einer zeitlichen Änderung der Commonmode-Spannung von einem jeweiligen Sollwert ausgebildet ist.

4. Schaltungsanordnung nach Anspruch 1 oder 2, **dadurch gekennzeichnet, dass** die Regeleinrichtung ein Umrichtermodell zur Voraussage der geregelten Zwlschenkrelskondensatorspannungen In Abhängigkeit der Commonmode-Spannung und weiterer Anlagengrössen aufweist.

5. Schaltungsanordnung nach Anspruch 1, **dadurch gekennzeichnet, dass** zwischen einem Lastanschluss (5) und einem wechselspannungsseitigen Anschluss (10) jeweils zwei zweite Stromrichter (7) in Serie geschaltet sind, wobei jeder diese zweiten Stromrichter (7) über einen ersten Brückenanschluss (6) einer ersten Umrichterbrücke (72) und über einen zweiten Brückenanschluss (8) einer zweiten Umrichterbrücke (73) angeschlossen ist und einen zweiten Gleichspannungszwischenkreis (71) mit einer zweiten Zwischenkreiskondensatorspannung aufweist, welcher parallel zur ersten und zweiten Umrichterbrücke (72, 73) geschaltet ist.

6. Verfahren zur Übertragung von Wirkleistung mittels einer leistungselektronischen Schaltungsanordnung von einer Gleichspannungsseite an mindestens zwei wechselspannungsseitige Anschlüsse (10) der Schaltungsanordnung oder umgekehrt, wobei

  a) mittels eines ersten Stromrichters (4), der an eine Gleichspannungsquelle mit einer ersten Zwischenkreiskondensatorspannung angeschlossen ist, an jeden von mindestens zwei Lastanschlüssen (5) des ersten Stromrichters (4) ein zugeordneter Spannungswert geschaltet wird,
  b) mittels mindestens eines zweiten Stromrichters (7), der an einen der Lastanschlüsse (5) angeschlossen ist, mit einem wechselspannungsseitigen Anschluss (10) verbunden ist und eine zweite Zwischenkreiskondensatorspannung aufweist, eine oder mehrere von: die positive zweite Zwischenkreiskondensatorspannung, die negative zweite Zwischenkreiskondensatorspannung oder null Volt zum Spannungswert des Lastanschlusses (5) addiert wird,

  **dadurch gekennzeichnet, dass**

  c) mindestens eine Zwischenkreiskondensatorspannung des mindestens einen zweiten Stromrichters (7) und eine Commonmode-Spannung der wechselspannungsseitigen Anschlüsse (10) der Schaltungsanordnung mittels einer gemeinsamen Regelung geregelt werden, und
  d) Halbleiterschalter des ersten Stromrichters (4) und des mindestens einen zweiten Stromrichters (7) nach Massgabe von Ausgangsgrössen dieser Regeleinrichtung (51,51') angesteuert werden.

7. Verfahren gemäss Anspruch 6, **dadurch gekennzeichnet, dass** die gemeinsame Regelung eine Zwischenkreiskondensatorspannung des ersten Stromrichters regelt.

8. Verfahren gemäss Anspruch 6 oder 7, **dadurch gekennzeichnet, dass** eine Kostenfunktion, welche eine gewichtete Summe der Quadrate der Abweichungen der geregelten Spannungen von einem jeweiligen Sollwert ist, minimiert wird, so dass die geregelten Zwischenkreiskondensatorspannungen im zeitlichen Mittelwert im Wesentlichen auf konstante Werte geregelt werden und dass eine Variation der Commonmode-Spannung zugelassen wird.

9. Verfahren gemäss Anspruch 6 oder 7, **dadurch gekennzeichnet, dass** eine Kostenfunktion, welche eine gewichtete Summe der Quadrate der Abweichungen der geregelten Spannungen von einem jeweiligen Sollwert ist, minimiert wird, so dass die geregelten Zwischenkreiskondensatorspannungen im zeitlichen Mittelwert im Wesentlichen auf konstante Werte geregelt werden und dass eine Variation der Commonmode-Spannung minimiert wird.

10. Verfahren gemäss Anspruch 8, **dadurch gekennzeichnet, dass** die folgenden Schritte ausgeführt werden:

  a) Voraussage einer Änderung der geregelten Zwischenkreiskondensatorspannungen in Abhängigkeit der Commonmode-Spannung und weiterer Anlagengrössen durch ein Umrichtermodell einer Abtastregelung in einem ersten Abtastzeitpunkt,
  b) Bestimmung einer Commonmode-Spannung, welche in mindestens einem nächsten Abtastzeitpunkt die Kostenfunktion minimiert, mittels einer Optimierung,
  c) Addieren dieser Commonmode-Spannung zu zur Lastansteuerung vorgegebenen Lastspannungssollwerten (55) der wechselspannungsseitigen Anschlüsse (10), wodurch sich modifizierte Lastspannungssollwerte der jeweiligen wechselspannungsseitigen Anschlüsse (10) ergeben,
  d) Ansteuern respektive Modulieren des ersten Stromrichters (4) und des mindestens einen zweiten Stromrichters (7) anhand dieser modifizierten Lastspannungssollwerte.

**Claims**

1. Power-electronic circuit arrangement for transmitting real power from a DC voltage-side to at least two AC voltage-side connections (10) or vice versa, comprising

   a first power converter (4) which is connected to a DC voltage source with a first intermediate-circuit capacitor voltage and has at least two load connections (5),

   and at least one second power converter (7), which is connected to one of the load connections (5) and is connected to an AC voltage-side connection (10), and which has a second intermediate-circuit capacitor voltage and in which case, by means of the second power converter (7), one or more of: the positive second intermediate-circuit capacitor voltage, the negative second intermediate-circuit capacitor voltage or zero volts can be added to a voltage value which can be connected by the first power converter (4) to its load connection (5), the at least one second power converter (7), for supplying with electrical energy and for drawing electrical energy, having no further connection than a first bridge connection (6) of the first converter bridge to one of the load connections (5) and a second bridge connection (8) of the second converter bridge to an AC-side connection (10),

   **characterized in that** the circuit arrangement has a regulating device (51, 51'), which serves for the joint regulation of at least one intermediate-circuit capacitor voltage of the at least one second power converter (7), and a common-mode voltage at the AC voltage-side connections (10) of the circuit arrangement, and **in that** the circuit arrangement has means serving for driving semiconductor switches in the first power converter (4) and in the at least one second power converter (7) on the basis of output variables from this regulating device (51, 51').

2. Circuit arrangement as claimed in Claim 1, **characterized in that** the regulating device (51, 51') is designed for regulating an intermediate-circuit capacitor voltage of the first power converter (4).

3. Circuit arrangement as claimed in Claim 1 or 2, **characterized in that** the regulating device is designed for minimizing a weighted sum of the squares of the errors between the regulated intermediate-circuit capacitor voltages, the common-mode voltage and any rate of change of the common-mode voltage and a respective nominal value.

4. Circuit arrangement as claimed in Claim 1 or 2, **characterized in that** the regulating device has a converter model for predicting the regulated intermediate-circuit capacitor voltages as a function of the common-mode voltage and of further system variables.

5. Circuit arrangement as claimed in Claim 1, **characterized in that** two second power converters (7) are in each case connected in series between a load connection (5) and an AC voltage-side connection (10), with each of these second power converters (7) being connected via a first bridge connection (6) of a first converter bridge (72) and via a second bridge connection (8) of a second converter bridge (73), and having a second DC voltage intermediate circuit (71) with a second intermediate-circuit capacitor voltage, which is connected in parallel with the first and second converter bridges (72, 73).

6. Method for transmitting real power by means of power-electronic circuit arrangement from a DC voltage side to at least two AC voltage-side connections (10) of the circuit arrangement, or vice versa, with

   a) an associated voltage value being connected to each of at least two load connections (5) of the first power converter (4) by means of said first power converter (4), which is connected to a DC voltage source with a first intermediate-circuit capacitor voltage,

   b) one or more of: the positive second intermediate-circuit capacitor voltage, the negative second intermediate-circuit capacitor voltage or zero volts being added to the voltage value of the load connection (5) by means of at least one second power converter (7), which is connected to one of the load connections (5) and is connected to an AC-voltage side connection (10) and has a second intermediate-circuit capacitor voltage,

   **characterized in that**

   c) at least one intermediate-circuit capacitor voltage of the at least one second power converter (7) and one common-mode voltage of the AC voltage-side connections (10) of the circuit arrangement are regulated by means of joint regulation, and

   d) semiconductor switches for the first power converter (4) and for the at least one second power converter (7) are driven on the basis of output variables from this regulating device (51, 51').

7. Method as claimed in Claim 6, **characterized in that** the joint regulation regulates an intermediate-circuit capacitor voltage of the first power converter.

8. Method as claimed in Claim 6 or 7, **characterized in that** a cost function, which is a weighted sum of the squares of the errors between the regulated voltages and a respective nominal value, is minimized, so that the regulated intermediate-circuit capacitor voltages are regulated, averaged over time, essentially at constant values, and **in that** variation of the common-mode voltage is permissible.

9. Method as claimed in Claim 6 or 7, **characterized in that** a cost function, which is a weighted sum of the squares of the errors between the regulated voltages and a respective nominal value, is minimized, so that the regulated intermediate-circuit capacitor voltages are regulated, averaged over time, essentially at constant values, and **in that** any variation of the common-mode voltage is minimized.

10. Method as claimed in Claim 8, **characterized in that** the following steps are carried out:

   a) prediction of a change in the regulated intermediate-circuit capacitor voltages as a function of the common-mode voltage and of further system variables by means of a converter model for sampling regulation at a first sampling time,
   b) the establishment of a common-mode voltage, which minimizes the cost function at at least a next sampling time, by means of optimization,
   c) the addition of this common-mode voltage to load voltage nominal values (55), which are predetermined for driving the load, of the AC voltage-side connections (10), thus resulting in modified load voltage nominal values at the respective AC voltage-side connections (10),
   d) driving or modulation of the first power converter (4) and of the at least one second power converter (7) on the basis of these modified load voltage nominal values.

**Revendications**

1. Arrangement de circuit électronique de puissance pour la transmission de la puissance active depuis un côté tension continue vers au moins deux bornes côté tension alternative (10) ou inversement, comprenant un premier convertisseur statique (4) qui est raccordé à une source de tension continue avec une première tension de condensateur de circuit intermédiaire et qui présente au moins deux bornes de charge (5),
et au moins un deuxième convertisseur statique (7) qui est raccordé à l'une des bornes de charge (5) et qui est relié avec une borne côté tension alternative (10), et lequel présente une deuxième tension de condensateur de circuit intermédiaire et une ou plusieurs des tensions suivantes pouvant être additionnées au moyen du deuxième convertisseur statique (7) : la deuxième tension de condensateur de circuit intermédiaire positive, la deuxième tension de condensateur de circuit intermédiaire négative ou une tension nulle à une valeur de tension connectée par le premier convertisseur statique (4) à sa borne de charge (5), l'au moins un deuxième convertisseur statique (7) ne présentant aucune borne supplémentaire autre que première borne de pont (6) du premier pont convertisseur sur l'une des bornes de charge (5) et une deuxième borne de pont (8) du deuxième pont convertisseur sur une borne côté tension alternative (10) pour l'alimentation avec de l'énergie électrique et pour le prélèvement d'énergie électrique,
**caractérisé en ce**
**que** l'arrangement de circuit présente un dispositif de régulation (51, 51') qui sert à la régulation commune d'au moins une tension de condensateur de circuit intermédiaire de l'au moins un deuxième convertisseur statique (7) et d'une tension de mode commun des bornes côté tension alternative (10) de l'arrangement de circuit, et
**que** l'arrangement de circuit présente des moyens qui servent à l'excitation de commutateurs semiconducteurs du premier convertisseur statique (4) et de l'au moins un deuxième convertisseur statique (7) en fonction de grandeurs de sortie de ce dispositif de régulation (51, 51').

2. Arrangement de circuit selon la revendication 1, **caractérisé en ce que** le dispositif de régulation (51, 51') est configuré pour la régulation d'une tension de condensateur de circuit intermédiaire du premier convertisseur statique (4).

3. Arrangement de circuit selon la revendication 1 ou 2, **caractérisé en ce que** le dispositif de régulation est configuré pour réduire un total pondéré des carrés des écarts des tensions de condensateur de circuit intermédiaire régulées, de la tension de mode commun et d'une variation dans le temps de la tension de mode commun par rapport à une valeur de consigne respective.

4. Arrangement de circuit selon la revendication 1 ou 2, **caractérisé en ce que** le dispositif de régulation présente un modèle de convertisseur pour prédire les tensions de condensateur de circuit intermédiaire régulées en fonction de la tension de mode commun et d'autres grandeurs de l'équipement.

**5.** Arrangement de circuit selon la revendication 1, **caractérisé en ce que** deux deuxièmes convertisseurs statiques (7) sont respectivement branchés en série entre une borne de charge (5) et une borne côté tension alternative (10), chacun de ces deuxièmes convertisseurs statiques (7) étant raccordé par le biais d'une première borne de pont (6) d'un premier pont convertisseur (72) et par le biais d'une deuxième borne de pont (8) d'un deuxième pont convertisseur (73) et présentant un deuxième circuit intermédiaire à tension continue (71) avec une deuxième tension de condensateur de circuit intermédiaire, lequel est branché en parallèle avec le premier et le deuxième pont convertisseur (72, 73).

**6.** Procédé de transmission de la puissance active au moyen d'un arrangement de circuit électronique de puissance depuis un côté tension continue vers au moins deux bornes côté tension alternative (10) de l'arrangement de circuit ou inversement, procédé selon lequel

a) une valeur de tension associée est connectée, au moyen d'un premier convertisseur statique (4), à chacune d'au moins deux bornes de charge (5) du premier convertisseur statique (4), lequel est raccordé à une source de tension continue avec une première tension de condensateur de circuit intermédiaire,

b) une ou plusieurs des tensions suivantes peuvent être additionnées au moyen d'au moins un deuxième convertisseur statique (7) qui est raccordé à l'une des bornes de charge (5) et qui est relié avec une borne côté tension alternative (10), et lequel présente une deuxième tension de condensateur de circuit intermédiaire : la deuxième tension de condensateur de circuit intermédiaire positive, la deuxième tension de condensateur de circuit intermédiaire négative ou une tension nulle à la valeur de tension de la borne de charge (5),

**caractérisé en ce que**

c) au moins une tension de condensateur de circuit intermédiaire de l'au moins un deuxième convertisseur statique (7) et une tension de mode commun des bornes côté tension alternative (10) de l'arrangement de circuit sont régulées au moyen d'une régulation commune, et

d) les commutateurs semiconducteurs du premier convertisseur statique (4) et de l'au moins un deuxième convertisseur statique (7) sont excités en fonction de grandeurs de sortie de ce dispositif de régulation (51, 51').

**7.** Procédé selon la revendication 6, **caractérisé en ce que** la régulation commune régule une tension de condensateur de circuit intermédiaire du premier convertisseur statique.

**8.** Procédé selon la revendication 6 ou 7, **caractérisé en ce qu'**une fonction de coût, laquelle est un total pondéré des carrés des écarts des tensions régulées par rapport à une valeur de consigne respective, est réduite de manière à ce que les tensions de condensateur de circuit intermédiaire régulées soient régulées en moyenne dans le temps pour l'essentiel à des valeurs constantes et **en ce qu'**une variation de la tension de mode commun soit autorisée.

**9.** Procédé selon la revendication 6 ou 7, **caractérisé en ce qu'**une fonction de coût, laquelle est un total pondéré des carrés des écarts des tensions régulées par rapport à une valeur de consigne respective, est réduite de manière à ce que les tensions de condensateur de circuit intermédiaire régulées soient régulées en moyenne dans le temps pour l'essentiel à des valeurs constantes et **en ce qu'**une variation de la tension de mode commun soit réduite.

**10.** Procédé selon la revendication 8, **caractérisé en ce que** les étapes suivantes sont exécutées :

a) prévision d'une modification des tensions de condensateur de circuit intermédiaire régulées en fonction de la tension de mode commun et d'autres grandeurs de l'équipement par un modèle de convertisseur d'une régulation par échantillonnage à un premier instant d'échantillonnage,

b) détermination au moyen d'une optimisation d'une tension de mode commun qui réduit la fonction de coût à au moins un instant d'échantillonnage suivant,

c) addition de cette tension de mode commun à des valeurs de consigne de tension de charge (55) des bornes côté tension alternative (10) prédéfinies pour l'excitation de la charge, ce qui résulte en des valeurs de consigne de tension de charge modifiées des bornes côté tension alternative (10) respectives,

d) excitation ou modulation du premier convertisseur statique (4) et de l'au moins un deuxième convertisseur statique (7) au moyen de ces valeurs de consigne de tension de charge modifiées.

**Fig. 1**

EP 1 253 706 B1

**Fig. 3**

**Fig. 4**

**Fig. 2**

20

**Fig. 5**

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19615855 A
- DE 19720787 A
- EP 0884831 A2
- EP 0802617 A2
- US 6005788 A
- US 5642275 A

**In der Beschreibung aufgeführte Nicht-Patentliteratur**

- **M. VEENSTRA ; A. RUFER.** PWM-control of multi-level voltage-source inverters. *Proceedings of the Power Electronics Specialists Conference,* 2000, vol. 3, 1387-1393